# EUROPEAN PATENT APPLICATION

(11) **EP 4 512 787 A1**
(43) Date of publication of application: **26.02.2025**
(21) Application number: 23193278.1
(22) Date of filing: 24.08.2023
(51) Int. Cl.: C04B 28/06, C04B 40/06

(54) **USE OF SODIUM POLYPHOSPHATES IN AN INORGANIC MORTAR SYSTEM BASED ON ALUMINOUS CEMENT TO ACCELERATE CALCIUM ALUMINATE CEMENT HYDRATION**

(71) Applicant: Hilti Aktiengesellschaft, 9494 Schaan (LI)
(72) Inventor: Goetz-Neunhöffer, Friedlinde, 91056 Erlangen (DE); Whittaker, Mark, 86899 Landsberg am Lech (DE); Rost, Pauline, 91052 Erlangen (DE); Schramm, Tillmann, 91056 Erlangen (DE)
(74) Representative: Hilti Aktiengesellschaft Corporate Intellectual Property

(57) **Abstract**

The present invention pertains to a use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in an inorganic mortar system for a chemical fastening of anchors and post-installed reinforcing bars in mineral substrates, comprising a curable aluminous cement component A and an initiator component B for initiating the curing process. Component A comprises a calcium aluminate cement, at least one blocking agent selected from the group consisting of boric acid, phosphoric acid, metaphosphoric acid, phosphorous acid and phosphonic acids and water, and component B comprises an activator and water. Moreover, the present invention pertains to a use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in an inorganic mortar to accelerate calcium aluminate cement hydration as well as to a method for a chemical fastening of anchors and post-installed reinforcing bars, preferably of metal anchors and post-installed reinforcing bars, in mineral substrates, such as structures made of brickwork, concrete, pervious concrete or natural stone.

## Description

### FIELD OF THE INVENTION

The present invention pertains to a use of sodium polyphosphate in an inorganic mortar system for a chemical fastening of anchors and post-installed reinforcing bars in mineral substrates, comprising a curable aluminous cement component A and an initiator component B for initiating the curing process. In particular, the present invention pertains to the use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in an inorganic mortar system for a chemical fastening of anchors and post-installed reinforcing bars in mineral substrates to accelerate calcium aluminate cement hydration. Moreover, the present invention pertains to a method for a chemical fastening of anchors and post-installed reinforcing bars, preferably of metal anchors and post-installed reinforcing bars, in mineral substrates, such as structures made of brickwork, concrete, pervious concrete or natural stone.

### BACKGROUND OF THE INVENTION

Many mortar systems exist which provide a good chemical fastening of anchors and post-installed reinforcing bars in mineral substrates or surfaces. For example, organic systems based on free-radically polymerizable resins are used when fast curing is desired. However, such systems are generally known to be polluting, expensive, potentially hazardous and/or toxic for the environment and for the person who handles them, and they often need to be specifically labelled. Moreover, organic systems often show a much reduced stability when thermally exposed to strong sunlight or otherwise elevated temperatures, such as fire, thereby decreasing their mechanical performance when it comes to chemically fastening of anchors and post-installed reinforcing bars.

In order to overcome these drawbacks, predominantly mineral systems based on aluminous cement have been developed. Aluminous cement has as its major constituent monocalcium aluminate and is widely used in the building and construction industry as the final products evidence a high level of mechanical performance over extended periods of time. Also, aluminous cement is resistant to bases and attains its maximum strength more rapidly than Portland cement and is capable of withstanding solutions of sulfates. Hence, aluminous cement systems are preferably employed in the field of chemical anchoring.

EP 2 162 410 describes a ready-for-use dual-component system including a part A based on an aqueous-phase aluminous cement, and a part B for initiating the curing process. The initiator in part B is made of only lithium salts. The system cures in less than 5 minutes after mixing of the two parts. EP 0 081 385 also discloses a dual-component system including a set-inhibited aqueous high alumina cement composition and a reactivator composition including lithium salts. Lithium salts are potent acceleration for the hydration of calcium aluminate cement. Those are expensive and can be toxic to humans, e.g., category 1A reproductive toxin. This may lead to tighter restrictions in the amount allowed products.

However, these aluminous cement aqueous suspensions comprising rare and expensive earth metals salts as activators are considered as critical in times of climate change and in view of the circumstances they are mined. In view of the above and in order to address the ecologically and economic aspects when producing such composition, reduction of rare alkali-metals, such as lithium, should be considered.

Therefore, there is a need for a ready-for-use multiple-component system, preferably a two-component system, which is superior over the prior art systems with regard to environmental aspects, health and safety, handling, storage time and a good balance between setting and hardening of the mortar. Moreover, it is of interest to provide a system that can be used for chemical fastening of anchoring means in mineral substrates without adversely affecting the handling, characteristics and the mechanical performance of the chemical anchoring system. In particular, there is a need for an alternative system that addresses positively all economic, ecological and toxic factors, specifically in view of the climate change and limited earth resources.

Further, calcium aluminate slurries are known to give high fire resistance for fastening points. However, compared to resin-based fastening mortars the hardening of such systems is rather slow, which requires longer waiting times on job sites and often leads to interruptions in the workflow. This is especially critical for anchoring applications, where immediate loading is of high importance. Additionally, calcium aluminate-based mortar suffers from conversion, which leads to a decrease in performance over time due to transformation of metastable hydrate phases CAH₁₀ and C₂AH₈ to the stable hydrate C₃AH₆.

Especially, there is a need for a system that provides for an accelerated calcium aluminate cement hydration when compared to the known systems. In addition, there is a need to improve the acceleration of calcium aluminate cement hydration by the addition of fillers or particles materials, such as an inorganic chemical anchor, to save expensive labor time, speed up construction work at a building site as well as to lower the consumption of more expensive binder material or to improve some properties of the mixed material. Most important, there is a need for an inorganic calcium aluminate cement-based system, wherein conversion, which leads to a decrease of performance over time due to transformation of metastable hydrate phases CAH₁₀ and C₂AH₈ to the stable hydrate C₃AH₆, is prevented and at the same time acceleration of the hydration is promoted.

In view of the above, it is an object of the present invention to provide an inorganic mortar system, preferably a multiple-component mortar system, in particular a two-component inorganic mortar system, which has an excellent mechanical performance, even at short curing times, and at the same time having increased load values when compared to the known systems. In particular, to provide an inorganic mortar system wherein conversion, which leads to a decrease of performance over time due to transformation of metastable hydrate phases CAH₁₀ and C₂AH₈ to the stable hydrate C₃AH₆, is prevented and at the same time acceleration of the hydration is promoted.

Moreover, it is an object of the present invention to provide a method for a chemical fastening of anchors and post-installed reinforcing bars, preferably of metal anchors and post-installed reinforcing bars, in mineral substrates, such as structures made of brickwork, concrete, pervious concrete or natural stone.

These and other objectives as they will become apparent from the ensuring description of the invention are solved by the present invention as described in the independent claims. The dependent claims pertain to preferred embodiments.

### SUMMARY OF THE INVENTION

In one aspect, the present invention pertains to a use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in an inorganic mortar system for a chemical fastening of anchors and post-installed reinforcing bars in mineral substrates, comprising a curable aluminous cement component A and an initiator component B for initiating the curing process. Component A comprises a calcium aluminate cement, at least one blocking agent selected from the group consisting of boric acid, phosphoric acid, metaphosphoric acid, phosphorous acid and phosphonic acids and water, and component B comprises an activator and water.

In another aspect, the present invention pertains to a use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof in an inorganic mortar system for a chemical fastening of anchors and post-installed reinforcing bars in mineral substrates to accelerate calcium aluminate cement hydration.

Finally, in another aspect, the present invention pertains to a method for a chemical fastening of anchors and post-installed reinforcing bars in mineral substrates, characterized in that an inorganic mortar system is used for fastening, which comprises a curable aluminous cement component A and an initiator component B for initiating the curing process, wherein component A comprises a calcium aluminate cement, at least one blocking agent selected from the group consisting of boric acid, phosphoric acid, metaphosphoric acid, phosphorous acid and phosphonic acids and water, and component B comprises an activator and water, and which contains sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof. The mineral substrates are substrates such as structures made of brickwork, concrete, pervious concrete or natural stone.

### DETAILED DESCRIPTION OF THE INVENTION

The following terms and definitions will be used in the context of the present invention:
As used in the context of present invention, the singular forms of "a" and "an" also include the respective plurals unless the context clearly dictates otherwise. Thus, the term "a" or "an" is intended to mean "one or more" or "at least one", unless indicated otherwise.

The term "aluminous cement" in the context of the present invention refers to a calcium aluminate cement that consists predominantly of hydraulic active calcium aluminates. Alternative names are "high-alumina cement" or "Ciment fondu" in French. The main active constituent of calcium aluminate cements is monocalcium aluminate (CaAl₂O₄, CaO · Al₂O₃, or CA in the cement chemist notation).

The term "activator" in the context of the present invention refers to a compound or composition that modifies the chemical environment to start a particular chemical reaction. In the present invention the activator modifies the pH-value of the mortar suspension thereby de-blocking the hydraulic binder in the final mixture.

The term "retarder" in the context of the present invention refers to a compound or composition that modifies the chemical environment to delay a particular chemical reaction. In the present invention the retarder modifies the hydration ability of the calcium aluminate cement of the mortar suspension thereby delaying the hydraulic binder action in the final mixture.

The term "accelerator" in the context of the present invention refers to a compound or composition that modifies the chemical environment to promote a particular chemical reaction. In the present invention the accelerator modifies the hydration ability of the calcium aluminate cement of the mortar suspension thereby speeding up the hydraulic binder action in the final mixture.

The term "initial set-time" in the context of the present invention refers to the time at which the mixture of component A and component B starts to set after mixing. During the time period after mixing, the mixture stays in the form of a more or less fluid aqueous suspension or paste of solid products.

It has been surprisingly found out by the inventors, that the addition of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, to an inorganic mortar system for a chemical fastening of anchors and post-installed reinforcing bars in mineral substrates, comprising a curable aluminous cement component, preferably based on calcium aluminate cement, results in a significant acceleration of calcium aluminate cement hydration when compared to a system not comprising any sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof. It has also been found out that the addition of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, does not adversely affecting the handling, characteristics and the mechanical performance of the chemical anchoring system, especially when applied with short curing times.

In addition, it has been found that the use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, can counteract conversion as well as are an accelerator for calcium aluminate cements, with having the possible potential to replace in part or in full lithium salts improving the associated risk of working with lithium salts.

Therefore, the present invention pertains to a use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in an inorganic mortar system for a chemical fastening of anchors and post-installed reinforcing bars in mineral substrates, comprising a curable aluminous cement component A and an initiator component B in for initiating the curing process. Component A comprises a calcium aluminate cement, at least one blocking agent selected from the group consisting of boric acid, phosphoric acid, metaphosphoric acid, phosphorous acid and phosphonic acids and water, and component B comprises an activator and water.

Component A as used in the present invention is based on an aluminous cement (CAC) or a calcium sulfoaluminate cement (CSA). The aluminous cement component which can be used in the present invention is preferably an aluminous cement component based on an aqueous-phase calcium aluminate cement (CAC). The aluminous cement to be used in the present invention is characterized by rapid set and rapid hardening, rapid drying, excellent resistance to corrosion and shrinkage. Such a calcium aluminate cement suitable to be used in the present invention is for example Ternal^{®} White (Kerneos, France).

If component A comprises a mixture of aluminous cement (CAC) and calcium sulfate (CaSO₄), rapid ettringite formation takes place during hydration. In concrete chemistry hexacalcium aluminate trisulfate hydrate, represented by the general formula (CaO)₆(Al₂O₃)(SO₃)₃·32 H₂O or (CaO)₃(Al₂O₃)(CaSO₄)₃·32H₂O, is formed by the reaction of calcium aluminate with calcium sulfate, resulting in quick setting and hardening as well as in shrinkage compensation or even expansion. With moderate increase of the sulfate content shrinkage compensation can be achieved.

Component A as used in the present invention comprises at least about 40 wt.-%, preferably at least about 50 wt.-%, more preferably at least about 60 wt.-%, most preferably at least about 70 wt.-%, from about 40 wt.-% to about 95 wt.-%, preferably from about 50 wt.-% to about 85 wt.-%, more preferably from about 60 wt.-% to about 80 wt.-%, most preferably from about 70 wt.-% to about 79 wt.-% of aluminous cement, based on the total weight of component A.

According to an alternative embodiment of the invention, component A as used comprises at least about 20 wt.-%, preferably at least about 30 wt.-%, more preferably at least about 40 wt.-%, most preferably at least about 50 wt.-%, from about 20 wt.-% to about 80 wt.-%, preferably from about 30 wt.-% to about 70 wt.-%, more preferably from about 35 wt.-% to about 60 wt.-%, most preferably from about 40 wt.-% to about 55 wt.-% of aluminous cement, based on the total weight of component A and at least about 5 wt.-%, preferably at least about 10 wt.-%, more preferably at least about 15 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-% of calcium sulfate, preferably calcium sulfate hemihydrate, based on the total weight of component A. In a preferred alternative embodiment of the two-component mortar system of the present invention, the ratio of CaSO₄/CAC of component A should be less or equal to 35:65.

The blocking agent comprised in component A as used in the present invention is selected from the group consisting of boric acid, phosphoric acid, metaphosphoric acid, phosphorous acid and phosphonic acids, preferably is phosphoric acid or metaphosphoric acid, most preferably is phosphoric acid, in particular an 85% aqueous solution of phosphoric acid. Component A comprises at least about 0.1 wt.-%, preferably at least about 0.3 wt.-%, more preferably at least about 0.4 wt.-%, most preferably at least about 0.5 wt.-%, from about 0.1 wt.-% to about 20 wt.-%, preferably from about 0.1 wt.-% to about 15 wt.-%, more preferably from about 0.1 wt.-% to about 10 wt.-%, most preferably from about 0.3 wt.-% to about 10 wt.-% of said blocking agent, based on the total weight of component A. In a preferred embodiment, component A comprises from about 0.3 wt.-% to about 10 wt.-% of 85% aqueous solution of phosphoric acid, based on the total weight of component A. Preferably, the amounts of aluminous cement and/or calcium sulfoaluminate cement by weight relative to the hydraulic binder total weight are higher than any of the following values: 50%, 60%, 70%, 80%, 90%, 95%, 99% or are 100%.

Component A may additionally comprise a plasticizer. The plasticizer comprised in component A may be selected from the group consisting of low molecular weight (LMW) polyacrylic acid polymers, superplasticizers from the family of polyphosphonate polyox and polycarbonate polyox, and ethacryl superplasticizers from the polycarboxylate ether group, and mixtures thereof, for example Ethacryl^{™} G (Coatex, Arkema Group, France), Acumer^{™} 1051 (Rohm and Haas, U.K.), or Sika^{®} ViscoCrete^{®}-20 HE (Sika, Germany). Suitable plasticizers are commercially available products. Component A may comprise at least about 0.2 wt.-%, preferably at least about 0.3 wt.-%, more preferably at least about 0.4 wt.-%, most preferably at least about 0.5 wt.-%, from about 0.2 wt.-% to about 20 wt.-%, preferably from about 0.3 wt.-% to about 15 wt.-%, more preferably from about 0.4 wt.-% to about 10 wt.-%, most preferably from about 0.5 wt.-% to about 5 wt.-% of said plasticizer, based on the total weight of component A.

In an advantageous embodiment, component A as used in the present invention further comprises the following characteristics, taken alone or in combination.

Component A may additionally comprise a thickening agent. The thickening agents which can be used in the present invention may be selected from the group consisting of organic products, such as xanthan gum, welan gum or DI UTAN^{®} gum (CPKelko, USA), starched-derived ethers, guar-derived ethers, polyacrylamide, carrageenan, agar, and mineral products, such as clay, and their mixtures. Suitable thickening agents are commercially available products. Component A comprises at least about 0.01 wt.-%, preferably at least about 0.1 wt.-%, more preferably at least about 0.2 wt.-%, most preferably at least about 0.3 wt.-%, from about 0.01 wt.-% to about 10 wt.-%, preferably from about 0.1 wt.-% to about 5 wt.-%, more preferably from about 0.2 wt.-% to about 1 wt.-%, most preferably from about 0.3 wt.-% to about 0.7 wt.-% of said thickening agent, based on the total weight of component A.

Component A may further comprise an antibacterial or biocidal agent. The antibacterial or biocidal agents which can be used in the present invention may be selected from the group consisting of compounds of the isothiazolinone family, such as methylisothiazolinone (MIT), octylisothiazolinone (OIT) and benzoisothiazolinone (BIT) and their mixtures. Suitable antibacterial or biocidal agents are commercially available products. Exemplarily mentioned are Ecocide K35R (Progiven, France) and Nuosept OB 03 (Ashland, The Netherlands). Component A comprises at least about 0.001 wt.-%, preferably at least about 0.005 wt.-%, more preferably at least about 0.01 wt.-%, most preferably at least about 0.015 wt.-%, from about 0.001 wt.-% to about 1.5 wt.-%, preferably from about 0.005 wt.-% to about 0.1 wt.-%, more preferably from about 0.01 wt.-% to about 0.075 wt.-%, most preferably from about 0.015 wt.-% to about 0.03 wt.-% of said antibacterial or biocidal agent, based on the total weight of component A. In a preferred embodiment, component A comprises from about 0.015 wt.-% to about 0.03 wt.-% of Nuosept OB 03, based on the total weight of component A.

In an alternative embodiment, component A comprises at least one filler, in particular an organic or mineral filler. The filler which can be used in the present invention may be selected from the group consisting of quartz powder, preferably quartz powder having an averaged grain size (d50%) of about 16 µm, quartz sand, clay, fly ash, fumed silica, carbonate compounds, aluminas, pigments, titanium oxides, light fillers, and their mixtures. Suitable mineral fillers are commercially available products. Exemplarily mentioned is quartz powder Millisil W12 or W6 (Quarzwerke GmbH, Germany). Component A comprises at least about 1 wt.-%, preferably at least about 2 wt.-%, more preferably at least about 5 wt.-%, most preferably at least about 8 wt.-% of said at least one filler, based on the total weight of component A.

The water content comprised in component A as used in the present invention is at least about 1 wt.-%, preferably at least about 5 wt.-%, more preferably at least about 10 wt.-%, most preferably at least about 20 wt.-%, from about 1 wt.-% to about 50 wt.-%, preferably from about 5 wt.-% to about 40 wt.-%, more preferably from about 10 wt.-% to about 30 wt.-%, most preferably from about 15 wt.-% to about 25 wt.-%, based on the total weight of component A.

Further, component A may also comprise a chelating agent and/or ion scavenger, such as sodium gluconate, which is known to a person skilled in the art. The presence of an accelerator, plasticizer, thickening agent as well as an antibacterial or biocidal agent, chelating agent and ion scavenger does not change the overall inorganic nature of the cementitious component A. Alternatively, the accelerator, plasticizer, thickening agent as well as an antibacterial or biocidal agent, chelating agent and ion scavenger can also be present in component B.

Component A comprising the aluminous cement or calcium sulfoaluminate cement is present in aqueous-phase, preferably in form of a slurry or paste.

The sodium polyphosphate used in the inorganic mortar system for a chemical fastening of anchors and post-installed reinforcing bars in mineral substrates according to the present invention, is a sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof. In particular, the sodium polyphosphate used is sodium tripolyphosphate (STPP, Na₅P₃O₁₀), sodium hexametaphosphate (SHMP, Na₆P₆O₁₈) or sodium metaphosphate (SMP, NaPO₃). In a most preferred embodiment, the sodium polyphosphate used is sodium tripolyphosphate (STPP, Na₅P₃O₁₀).

Sodium polyphosphates are salts of phosphoric acid, which are formed during condensation on hydrophosphates. Different sodium polyphosphates are distinguished on the one side by their chemical structure (e.g. they can be chain- or ring-shaped), on the other side by their chain length. Sodium polyphosphates are known to be watersoluble and decompose by reversing the condensation reaction, this is accelerated by increasing temperature or lowering pH. In addition, sodium polyphosphates have the ability to form cation-binding complexes with alkali metals, which is utilized in water treatment or detergents, as they have an inhibitory effect on the crystal growth of e.g. CaCO₃. Besides sodium tripolyphosphate (STPP, Na₅P₃O₁₀), there also exist sodium hexametaphosphate (SHMP, Na₆P₆O₁₈), sodium trimetaphosphate (STMP, Na₃P₃O₉) and sodium metaphosphate (SMP, NaPO₃).

Preferably, the sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, used according to the present invention, is comprised in the initiator component B of the inorganic mortar system. In a preferred embodiment of the present invention, the sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, is comprised in initiator component B further comprising an activator and water. The addition of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, to the inorganic mortar system, such as an inorganic chemical anchors, is to improve some properties of the mixed material, especially to accelerate cement hydration as well as to increase the load values.

Component B as used in the present invention comprises at least about 0.01 wt.-%, preferably at least about 0.1 wt.-%, more preferably at least about 0.5 wt.-%, most preferably at least about 1.0 wt.-%, from about 0.01 wt.-% to about 25 wt.-%, preferably from about 0.1 wt.-% to about 20 wt.-%, more preferably from about 0.5 wt.-% to about 15 wt.-%, most preferably from about 1.0 wt.-% to about 10 wt.-% of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, based on the total weight of component B.

Component B as used in the present invention further comprises an activator and water.

The activator present in component B comprises an alkali and/or alkaline earth metal salt or a mixture thereof.

In particular, the activator component is constituted of at least one alkali and/or alkaline earth metal salt selected from the group consisting of hydroxides, chlorides, sulfates, phosphates, monohydrogen phosphates, dihydrogen phosphates, nitrates, carbonates and mixtures thereof, preferably the activator component is an alkali or alkaline earth metal salt, more preferably is a calcium metal salt, such as calcium hydroxide, calcium sulfate, calcium carbonate, calcium formate, calcium nitrate or calcium phosphate, a sodium metal salt, such as sodium hydroxide, sodium sulfate, sodium carbonate, sodium nitrate or sodium phosphate, or a lithium metal salt, such as lithium hydroxide, lithium sulfate, lithium carbonate, lithium nitrate or lithium phosphate, or a potassium metal salt, such as potassium hydroxide, potassium sulfate, potassium carbonate, potassium formate, potassium nitrate or potassium phosphate, most preferably is sodium hydroxide.

Component B comprises at least about 0.01 wt.-%, preferably at least about 0.02 wt.-%, more preferably at least about 0.05 wt.-%, most preferably at least about 1 wt.-%, from about 0.01 wt.-% to about 40 wt.-%, preferably from about 0.02 wt.-% to about 35 wt.-%, more preferably from about 0.05 wt.-% to about 30 wt.-%, most preferably from about 1 wt.-% to about 25 wt.-% of said activator, based on the total weight of component B. In a particular preferred embodiment, the activator is sodium hydroxide. In a particular preferred embodiment the sodium hydroxide content comprised in component B is at least about 0.1 wt.-%, preferably at least about 1 wt.-%, more preferably at least about 2 wt.-%, most preferably at least about 3 wt.-%, from about 0.1 wt.-% to about 15 wt.-%, preferably from about 1 wt.-% to about 10 wt.-%, more preferably from about 2 wt.-% to about 8 wt.-%, most preferably from about 3 wt.-% to about 6 wt.-%, based on the total weight of component B.

The water content comprised in component B is at least about 1 wt.-%, preferably at least about 5 wt.-%, more preferably at least about 10 wt.-%, most preferably at least about 20 wt.-%, from about 1 wt.-% to about 60 wt.-%, preferably from about 5 wt.-% to about 50 wt.-%, more preferably from about 10 wt.-% to about 40 wt.-%, most preferably from about 15 wt.-% to about 30 wt.-%, based on the total weight of component B.

To ensure a sufficient processing time, component B may comprise at least one retarder, which prevents premature hardening of the mortar composition, and which can be used in a distinct concentration in addition to the activator component.

The at least one retarder to be used in the present invention may be selected from the group consisting of citric acid, tartaric acid, lactic acid, salicylic acid, gluconic acid and mixtures thereof, preferably is tartaric acid or a mixture of citric acid and tartaric acid. Component B may comprise at least about 0.1 wt.-%, preferably at least about 0.2 wt.-%, more preferably at least about 0.5 wt.-%, most preferably at least about 1.0 wt.-%, from about 0.1 wt.-% to about 25 wt.-%, preferably from about 0.2 wt.-% to about 15 wt.-%, more preferably from about 0.5 wt.-% to about 15 wt.-%, most preferably from about 1.0 wt.-% to about 10 wt.-% of said retarder, based on the total weight of component B.

Component B may additionally comprise at least one mineral filler. The at least one mineral filler to be used in the present invention may be selected from the group consisting of limestone fillers, sand, corundum, dolomite, alkaline-resistant glass, alumina, crushed stones, gravels, pebbles and mixtures thereof, preferred are limestone fillers, such as various calcium carbonates. The at least one mineral filler is preferably selected from the group consisting of limestone fillers or quartz fillers, such as quartz powder Millisil W12 or W6 (Quarzwerke GmbH, Germany) and quartz sand. The at least one mineral filler of component B is most preferably a calcium carbonate or a mixture of calcium carbonates. Component B comprises at least about 20 wt.-%, preferably at least about 30 wt.-%, more preferably at least about 40 wt.-%, still more preferably at least about 50 wt.-%, most preferably at least about 60 wt.-%, from about 20 wt.-% to about 95 wt.-%, preferably from about 30 wt.-% to about 90 wt.-%, more preferably from about 40 wt.-% to about 85 wt.-%, still more preferably from about 50 wt.-% to about 80 wt.-%, most preferably from about 60 wt.-% to about 70 wt.-% of at least one mineral filler, based on the total weight of component B.

In an advantageous embodiment, component B further comprises the following characteristics, taken alone or in combination.

Component B may additionally comprise a thickening agent. The thickening agent to be used in the present invention may be selected from the group consisting of bentonite, silicon dioxide, quartz, thickening agents based on acrylate, such as alkali-soluble or alkali-swellable emulsions, fumed silica, clay and titanate chelating agents or combinations thereof. Exemplarily mentioned are polyvinyl alcohol (PVA), hydrophobically modified alkali soluble emulsions (HASE), hydrophobically modified ethylene oxide urethane polymers known in the art as HEUR, and cellulosic thickeners such as hydroxymethyl cellulose (HMC), hydroxyethyl cellulose (HEC), hydrophobicallymodified hydroxy ethyl cellulose (HMHEC), sodium carboxymethyl cellulose (SCMC), sodium carboxymethyl 2-hydroxyethyl cellulose,2-hydroxypropyl methyl cellulose, 2-hydroxyethyl methyl cellulose, 2-hydroxybutyl methyl cellulose, 2-hydroxyethyl ethyl cellulose, 2-hydoxypropyl cellulose, attapulgite clay, and mixtures thereof. Suitable thickening agents are commercially available products, such as Optigel WX (BYK-Chemie GmbH, Germany), Rheolate 1 (Elementis GmbH, Germany) and Acrysol ASE-60 (The Dow Chemical Company). Component B comprises at least about 0.01 wt.-%, preferably at least about 0.05 wt.-%, more preferably at least about 0.1 wt.-%, most preferably at least about 0.2 wt.-%, from about 0.01 wt.-% to about 15 wt.-%, preferably from about 0.05 wt.-% to about 10 wt.-%, more preferably from about 0.1 wt.-% to about 5 wt.-%, most preferably from about 0.2 wt.-% to about 1 wt.-% of said thickening agent, based on the total weight of component B.

Further, component B may also comprise a plasticizer, which is known to a person skilled in the art. The presence of a retarder and thickening agent as well as a plasticizer does not change the overall inorganic nature of the cementitious component B. Alternatively, the retarder and thickening agent as well as a plasticizer can also be present in component A.

Component B comprising the activator is present in aqueous-phase, preferably in form of a slurry or paste.

It is preferred that the pH-value of component B is above 10, more preferably above 11 and most preferably is above 12, in particular in the range between 10 and 14, preferably between 11 and 13.

It is particular preferred that the proportions of water in the two components, namely component A and component B, are chosen so that the water to aluminous cement ratio (W/CAC) or water to calcium sulfoaluminate cement (W/CAS), in the product obtained by mixing components A and B is lower than 1.5, preferably between 0.2 and 0.8, most preferably between 0.3 and 0.5. In a preferred embodiment, the ratio of water to calcium aluminate cement comprising calcium sulfate (W/(CAC+CaSO₄)) in the product obtained by mixing components A and B is 0.35

It is particular preferred that the sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in the product obtained by mixing components A and B is present in the range of from about 0.01 wt.-% to 30.0 wt.-%, preferably from about 0.05 wt.-% to 20.0 wt.-%, more preferably from about 0.8 wt.-% to 15.0 wt.-%, most preferably from about 0.1 wt.-% to 10.0 wt.-%.

In a most preferred embodiment, component A comprises or consists of the following components:
70 to 85 wt.-% of aluminous cement,
0.5 to 1.5 wt.-% of phosphoric acid,
0.05 to 2.0 wt.% sodium gluconate,
0.5 to 1.5 wt.-% of plasticizer,
0.001 to 0.05 wt.-% of an antimicrobial or biocidal agent,
optionally 5 to 30 wt.-% of mineral fillers, and
15 to 25 wt.-% of water.

In a most preferred embodiment, component B comprises or consists of the following components:
0.1 wt.-% to 10 wt.-% of a sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof,
0.1 wt.-% to 5 wt.-% of sodium hydroxide,
0.05 wt.-% to 5 wt.-% of citric acid,
0.05 wt.-% to 4 wt.-% of tartaric acid,
30 wt.-% to 85 wt.-% of a mineral filler,
0.01 wt.-% to 0.5 wt.-% of a thickening agent, and
15 wt.-% to 25 wt.-% of water.

Component A as used in the present invention may be prepared as follows: The blocking agent is mixed with water, so that the pH-value of the resulting mixture is about 2. Optional plasticizer and antibacterial/biocidal agent are added, and the mixture homogenized. Aluminous cement, optionally calcium sulfate, and optionally mineral filler are premixed and added stepwise to the mixture whilst increasing the stirring speed, so that the pH-value of the resulting mixture is below 7. Finally, thickening agent is added and mixed until complete homogenization of the mixture.

Component B as used in the present invention may be prepared as follows: The activator is dissolved in deionized water, followed by subsequent optional addition of retarder, thickening agent and mineral filler under stirring. The sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, is completely dissolved in a very first step and the remaining components are added whilst increasing the stirring speed until the mixture homogenizes, obtaining finally a smooth, liquid pasty slurry, the pH being above 12.

Component A and B are present in aqueous phase, preferably in form of a slurry or paste. In particular, components A and B have a pasty to fluid aspect according to their respective compositions. In one preferred embodiment, component A and component B are in paste form thereby preventing sagging at the time of mixing the two components.

The weight ratio between component A and component B (A/B) is preferentially comprised between 7/1 and 1/3, preferably is 3/1. Preferably, the composition of the mixture comprises 75 wt.-% of component A and 25 wt.-% of component B. In an alternative embodiment, the composition of the mixture comprises 25 wt.-% of component A and 75 wt.-% of component B.

The inorganic mortar system, preferably the two-component inorganic mortar system, is of mineral nature, which is not affected by the presences of additional thickening agents of other agents.

It is preferred that the inorganic mortar system has an initial set-time of at least 5 min, preferably of at least 10 min, more preferably of at least 15 min, most preferably of at least 20 min, in particular in the range of from about 5 to 25 min, preferably in the range of about 10 to 20 min, after mixing of the two components A and B.

In the multi-component inorganic mortar system, especially the two-component inorganic mortar system, the volume ratio of cementitious component A to initiator component B is 1:1 to 7:1, preferably is 3:1. In an alternative embodiment, the volume ratio of cementitious component A to initiator component B is 1:3 to 1:2.

After being produced separately, component A and component B are introduced into separate containers, from which they are ejected by means of mechanical devices and are guided through a mixing device. The inorganic mortar system is preferably a ready-for-use system, whereby component A and B are separately arranged from each other in a multi-chamber device, such as a multi-chamber cartridge and/or a multi-chamber cylinder or in two-component capsules, preferably in a two-chamber cartridge or in two-component capsules. The multi-chamber system preferably includes two or more foil bags for separating curable component A and initiator component B. The contents of the chambers or bags which are mixed together by a mixing device, preferably via a static mixer, can be injected into a borehole. The assembly in multiple chamber cartridges or pails or sets of buckets is also possible.

The hardening aluminous cement composition exiting from the static mixer is inserted directly into the borehole, which is required accordingly for fastening the anchors and post-installed reinforcing bars, and has been initially introduced into the mineral substrate, during the chemical fastening of anchors and post-installed reinforcing bars, whereupon the construction element to be fastened, for example an anchor rod, is inserted and adjusted, whereupon the mortar composition sets and hardens. In particular, the inorganic mortar system is to be considered as a chemical anchor for fastening metal anchors and post-installed reinforcing bars.

The role of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, is considered to provide an accelerator for calcium aluminate cements, with having the possible potential to replace in part or in full lithium salts improving the associated risk of working with lithium salts. These sodium polyphosphates have a positive influence on workability, strength development and phase condition of calcium aluminate cements. Further, the sodium polyphosphates promote formation of crystalline hydrate phases, such as CAH₁₀, C₂AH_{X}, AH₃, hemicarbonate and monocarbonate, thereby showing an influence on the amount of crystalline C₂AH_{X}.

The role of the mineral fillers in addition to the sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in particular in component B, is to further adjust the final performance with regard to mechanical strength and performance as well as long term durability. By optimizing the fillers, it is possible to optimize the water/solids ratio which allows for an efficient and still faster hydration of the aluminous cement and a low porosity of the final cement matrix.

The inorganic mortar system comprising the sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, can be used for a chemical fastening of anchors and post-installed reinforcing bars, preferably of metal anchors and post-installed reinforcing bars, such as anchor rods, in particular threaded rods, bolts, steel reinforcement bars or the like into mineral substrates, such as structures made of brickwork, concrete, pervious concrete or natural stone. In particular, the inorganic mortar system can be used for a chemical fastening of anchors and post-installed reinforcing bars, such as metal anchors and post-installed reinforcing bars, in boreholes. It has been found out, that the use of sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, in such an inorganic mortar system significantly accelerates calcium aluminate cement hydration as well as increases the load values and hence load capacity in boreholes, especially at earlier curing times.

The sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, comprised in the inorganic mortar is particularly applied in a method for a chemical fastening of anchors and post-installed reinforcing bars, preferably of metal anchors and post-installed reinforcing bars, in mineral substrates, such as structures made of brickwork, concrete, pervious concrete or natural stone.

Moreover, the inorganic mortar system comprising the sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof, may be used for the attachment of fibers, scrims, fabrics or composites, in particular of high-modulus fibers, preferably of carbon fibers, in particular for the reinforcement of building structures, for example walls or ceilings or floors, or further for mounting components, such as plates or blocks, e.g. made of stone, glass or plastic, on buildings or structural elements. However, in particular it is used for fastening of anchors and post-installed reinforcing bars, preferably metal anchors and post-installed reinforcing bars, such as anchor rods, in particular threaded rods, bolts, steel reinforcement bars or the like into recesses, such as boreholes, in mineral substrates, such as structures made of brickwork, concrete, pervious concrete or natural stone, whereby the components of the two-component inorganic mortar system are prior mixed, for example by means of a static mixer or by destroying a cartridge or a plastic bag, or by mixing components of a multi-chamber pails or sets of buckets.

The following example illustrates the invention without thereby limiting it.

### EXAMPLES

### 1. Preparation of paste model systems

In order to evaluate the potential of sodium polyphosphates, model cementitious systems were prepared by mixing together by hand blend 60 g of calcium aluminate cement (Ternal White^{®}) with about 15 g of calcium carbonate (Omyacarb 15H AL) and 5.0 g of a fine calcium carbonate (Betocarb UF). Water was then added and mixed until a smooth paste was obtained. Sodium polyphosphates containing samples were prepared by adding either sodium tripolyphosphate (STPP, Na₅P₃O₁₀) or sodium hexametaphosphate (SHMP, Na₆P₆O₁₈) (Tables 1 and 2). An equal amount of calcium carbonate (Omyacarb 15H Al) was substituted for the phosphates, with phosphate dosages ranging from 0.1% to 1.0% of calcium aluminate cement. When preparing the phosphate rich samples, the phosphate salts were first diluted in the water phase. The phosphate laden water was then mixed with the dry ingredients.

**Table 1: Model systems with STTP - amounts given in wt.-%.**

| | **No STPP** | **0.1% STPP** | **0.2% STPP** | **0.4% STPP** | **0.6%STPP** | **0.8% STPP** | **1.0% STPP** |
|---|---|---|---|---|---|---|---|
| Ternal White^{®} | 60.00 | 60.00 | 60.00 | 60.00 | 60.00 | 60.00 | 60.00 |
| Omyacarb 15H AL | 15.00 | 14.94 | 14.88 | 14.76 | 14.64 | 14.52 | 14.4 |
| Betocarb UF | 5.00 | 5.00 | 5.00 | 5.00 | 5.00 | 5.00 | 5.00 |
| STPP | - | 0.06 | 0.12 | 0.24 | 0.36 | 0.48 | 0.60 |
| H₂O | 20.00 | 20.00 | 20.00 | 20.00 | 20.00 | 20.00 | 20.00 |

**Table 2: Model systems with SHMP - amounts given in wt.-%.**

| | **No SHMP** | **0.1% SHMP** | **0.2% SHMP** |
|---|---|---|---|
| Ternal White^{®} | 60.00 | 60.00 | 60.00 |
| Omyacarb 15H AL | 15.00 | 14.94 | 14.88 |
| Betocarb UF | 5.00 | 5.00 | 5.00 |
| SHMP | - | 0.06 | 0.12 |
| H₂O | 20.00 | 20.00 | 20.00 |

### 2. Preparation of component A and B of the inorganic mortar system

The cementitious component A as well as the initiator component B of the comparative example and of inventive examples are initially produced by mixing the constituents specified in Tables 3 and 4, respectively. The proportions that are given are expressed in wt.-%.

### 2.1. Component A

19.6 grams deionized water, 0.75 grams of 85% phosphoric acid (blocking agent), 0.3 grams sodium gluconate, 0.7 grams Ethacryl GO (superplasticizer), and 0.02 grams Nuosept^{®} (biocide) were homogenized at room temperature, and whilst stirring with a dissolver, the calcium aluminate cement (78.13 grams, pure Ternal White ^{®}) is added in subsequent small portions, to obtain finally a smooth, liquid pasty slurry of the blocked cement in water, the pH being below 7. After addition of the calcium aluminate cement, 0.5 grams xanthan gum (thickener) were added and the slurry was homogenized.

**Table 3: Composition of binder component A.**

| **Ingredients of component A** | **Binder component A0** |
|---|---|
| Water | 19.60 |
| Ternal White^{®} | 78.13 |
| Sodium gluconate | 0.30 |
| 85% H₃PO₄ | 0.75 |
| Xanthan Gum | 0.50 |
| Ethacryl G | 0.70 |
| Nuosept | 0.02 |

| | |
|---|---|
| Phosphoric acid 85% marketed by Sigma-Aldrich Chemie GmbH, Germany; sodium gluconate marketed by Jungbunzlauer S.A., France, Germany; Ethacryl G marketed by Coatex S.A., France; Ternal White^{®} marketed by Kerneos S.A., France; Xanthan Gum marketed by Kremer Pigmente GmbH & CO. KG, Germany; Nuosept OB 03 marketed by Ashland Nederland B.V., The Netherlands. | |

### 2.2. Component B

A comparative B-component example was prepared by dissolving in 19.50 g of water 4 g of sodium hydroxide and 1.2 g of tartaric acid. 0.65 g of Ecodis P50 was then added. While stirring continuously with a dissolver plate (200 RPM), the mineral fillers were added, increasing in increments the rotation speed of the dissolver plate after each filler addition, up to a maximum of 2000 RPM. Lastly, 0.4 g Optigel was added and the mass was stirred for a final 5 minutes.

In B components prepared with sodium phosphates, the phosphate salt was first allowed to dissolve fully in the water. The components where then prepared as described directly above. The phosphate amounts in the B component were chosen such that the sodium phosphate amount was equal to 0.5%, 1.0%, or 1.5% by weight of calcium aluminate cement. The chosen phosphate salts were sodium hexametaphosphate (SHMP, Na₆P₆O₁₈), sodium tripolyphosphate (STPP, Na₅P₃O₁₀) and sodium metaphosphate (SMP, NaPO₃). The phosphate source replaced primarily the quarz sand, and at the higher concentration some of the mixing water.

**Table 4: Composition of initiator component B.**

| **Ingredients of component B** | **Comp arative** | **0.5% SMP** | **1.0% SMP** | **1.5% SMP** | **0.5% SHMP** | **1.0% SHMP** | **1.5% SHMP** | **0.5% STPP** | **1.0% STPP** | **1.5% STPP** |
|---|---|---|---|---|---|---|---|---|---|---|
| Water | 19.50 | 19.50 | 19.50 | 19.15 | 19.50 | 19.50 | 19.15 | 19.50 | 19.50 | 19.15 |
| NaOH (s) | 4.00 | 4.00 | 4.00 | 4.00 | 4.00 | 4.00 | 4.00 | 4.00 | 4.00 | 4.00 |
| Tartaric acid | 1.20 | 1.20 | 1.20 | 1.20 | 1.20 | 1.20 | 1.20 | 1.20 | 1.20 | 1.20 |
| Ecod is P50 | 0.65 | 0.65 | 0.65 | 0.65 | 0.65 | 0.65 | 0.65 | 0.65 | 0.65 | 0.65 |
| Quarz F32 | 3.25 | 2.05 | 0.85 | 0.00 | 2.05 | 0.85 | 0.00 | 2.05 | 0.85 | 0.00 |
| Omyacarb 130 | 34.00 | 34.00 | 34.00 | 34.00 | 34.00 | 34.00 | 34.00 | 34.00 | 34.00 | 34.00 |
| Omyacarb 15-H AL | 15.00 | 15.00 | 15.00 | 15.00 | 15.00 | 15.00 | 15.00 | 15.00 | 15.00 | 15.00 |
| Omyacarb 2-AL | 9.00 | 9.00 | 9.00 | 9.00 | 9.00 | 9.00 | 9.00 | 9.00 | 9.00 | 9.00 |
| Socal 31 | 13.00 | 13.00 | 13.00 | 13.00 | 13.00 | 13.00 | 13.00 | 13.00 | 13.00 | 13.00 |
| Optigel wx | 0.40 | 0.40 | 0.40 | 0.40 | 0.40 | 0.40 | 0.40 | 0.40 | 0.40 | 0.40 |
| SMP | - | 1.20 | 2.40 | 3.60 | - | - | - | - | - | - |
| SHMP | - | - | - | - | 1.20 | 2.40 | 3.60 | - | - | - |
| STPP | - | - | - | - | - | - | - | 1.20 | 2.40 | 3.60 |

| | | | | | | | | | | |
|---|---|---|---|---|---|---|---|---|---|---|
| NaOH marketed, Germany; Tartaric acid marketed by BCD Chemie GmbH, Germany; Omyacarb 130-Al, Omyacarb 15-H Al, Omyacarb 2-Al marketed by Omya International AG, Germany; Optigel WX marketed by BYK Chemie GmbH, Germany; Ecodis P50 marketed by Coatex (Arkema Group), Quarz F32 marketed by Quarzwerke GmbH, Deutschland; Socal 31 marketed by Solvay Oesterreich GmbH, Austria; SMP marketed by VWR International GmbH, SHMP marketed by Sigma Aldrich Chemie GmbH, Germany; STPP marketed by ThermoFisher GmbH. | | | | | | | | | | |

### 3. Characterization of the impact of the sodium polyphosphates on the hydration of calcium aluminate cement - Heat output by isothermal conduction calorimetry

Isothermal heat flow calorimetry is a common tool to assess the reactivity of cementitious mortars. The screening of different sodium polyphosphates and their effectiveness to accelerate the hydration reaction of calcium aluminate cement was evaluated by using a TAM Air 8-channel calorimeter by TA Instruments.

### 3.1 Experimental setup - model systems

The dry ingredients were first mixed by hand until fully homogenized. The water component was then added and mixed for 1 minute. 2 g of paste was transferred into glass vials and lowered into a TAM air 8-channel calorimeter running at 23°C. The heat output from the reaction was measured for a total period of 24h (Table 5).

**Table 5: Maximum heat output recorded and time of occurrence in the model systems.**

| **Example** | **Time until max. heat output (in hours)** | **Max. heat output measured (in mW/g of cement)** |
|---|---|---|
| Comparative (no STPP, no SHMP) | 5.94 | 22.41 |
| 0.1% STPP | 5.38 | 21.32 |
| 0.2% STPP | 4.03 | 26.81 |
| 0.4% STPP | 3.83 | 27.69 |
| 0.6% STPP | 4.12 | 30.6 |
| 0.8% STPP | 3.82 | 34.34 |
| 1.0% STPP | 3.72 | 33.61 |
| 0.1% SHMP | 4.48 | 22.36 |
| 0.2% SHMP | 3.10 | 27.81 |

The model systems made up with sodium polyphosphate show an acceleration in the reaction when concentrations are already as low as 0.1% of phosphate salt by weight of calcium aluminate. With respect to STPP, the acceleration effect increases with STPP concentration such that at 1.0 % concentration, the max. heat output occurs after 3.72 hours of hydration. With respect to SHMP, the acceleration effect is much greater. Only 0.2% of SHMP by weight of calcium aluminate is enough to shift the max. heat rate output after just 3.10 hours.

### 3.2 Experimental setup - 2-Component inorganic mortar systems

15 g of A-component was mixed with 5 g of B-component in a speed mixer, mixing at 1750 RPM for 30 seconds. Approximately 3 g of the mixed mass was transferred into glass vials before being inserted into an TAM air 8-channel calorimeter running at 23°C. The heat output from the reaction was measured for a total period of 24h (Table 6).

**Table 6: Maximum heat output recorded and time of occurrence in the 2-Component inorganic mortar systems.**

| **Example** | **Time until max. heat output (in hours)** | **Max. heat output measured (in mW/g of cement)** |
|---|---|---|
| Comparative (no sodium polyphosphate) | 12.58 | 20.96 |
| 0.5% SMP | 9.01 | 21.21 |
| 1.0% SMP | 9.89 | 22.81 |
| 1.5% SMP | 3.88 | 16.44 |
| 0.5% SHMP | 8.08 | 21.50 |
| 1.0% SHMP | 6.12 | 17.21 |
| 1.5% SHMP | 8.99 | 9.09 |
| 1.0% STPP | 4.38 | 23.33 |

In the two-component system, an acceleration effect is also observed against the sodium polyphosphate-free comparative example. For a fixed concentration, e.g. 1.0% by weight of calcium aluminate cement, SMP is most effective at accelerating the reaction.

The sodium polyphosphates provide a much higher acceleration than systems having no sodium polyphosphate. Further, the sodium polyphosphate compounds demonstrated to be a potent accelerator for calcium aluminate cements, with having the possible potential to replace in part or in full lithium salts improving the associated risk of working with lithium salts. The addition of sodium polyphosphates results in a significant increase of load values when compared to systems not comprising any sodium polyphosphates. Moreover, the performance improves significantly in boreholes when high load values are desired, as well as it was found that the inventive systems comprising sodium polyphosphates do not show any micro-cracks after curing. Hence, the inventive systems provide for a dense, sealed anchoring system which is an important pre-condition for obtaining improved corrosion and freeze-thaw resistance as well as provide for high load values.

As it has been shown above, the addition of sodium polyphosphates to materials, such as an inorganic chemical anchors, results in an increase of load values and at the same time lowers the consumption of more expensive ingredients and improves some properties of the mixed material.

## Claims

1. Use of a sodium polyphosphate in an inorganic mortar system for a chemical fastening of anchors and post-installed reinforcing bars in mineral substrates, comprising a curable aluminous cement component A and an initiator component B for initiating the curing process, to accelerate calcium aluminate cement hydration.

2. Use according to claim 1, wherein the sodium polyphosphate is selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof.

3. Use according to claim 1 or 2, wherein the sodium polyphosphate is sodium tripolyphosphate (STPP, Na₅P₃O₁₀).

4. Use according to any one of the preceding claims, wherein component A comprises a calcium aluminate cement, at least one blocking agent and water, and component B comprises an activator and water.

5. Use according to any one of the preceding claims, wherein the aluminous cement component A is an aluminous cement component based on an aqueous-phase calcium aluminate cement.

6. Use according to any one of the preceding claims, wherein the at least one blocking agent selected from the group consisting of boric acid, phosphoric acid, metaphosphoric acid, phosphorous acid and phosphonic acids.

7. Use according to any one of the preceding claims, wherein the sodium polyphosphate is comprised in the initiator component B of the inorganic mortar system.

8. Use according to claim 7, wherein the sodium polyphosphate comprised in the initiator component B is present in the range of from about 0.01 wt.-% to 25.0 wt.-%, based on the total weight of component B.

9. Use according to any one of claims 4 to 8, wherein the activator comprises an alkali and/or alkaline earth metal salt, and optionally at least one retarder selected from the group consisting of citric acid, tartaric acid, lactic acid, salicylic acid, gluconic acid and mixtures thereof, and optionally at least one mineral filler selected from the group consisting of limestone fillers, sand, corundum, dolomite, alkaline-resistant glass, alumina, crushed stones, gravels, pebbles and mixtures thereof.

10. Use according to any one of claims 4 to 8, wherein the activator component is constituted of at least one alkali and/or alkaline earth metal salt selected from the group consisting of hydroxides, chlorides, sulfates, phosphates, monohydrogen phosphates, dihydrogen phosphates, nitrates, carbonates and mixtures thereof.

11. Use according to any one of the preceding claims, wherein the anchors and post-installed reinforcing bars are anchor rods, threaded anchor rods, bolts or steel reinforcement bars.

12. Use according to any one of the preceding claims, wherein the mineral substrates are structures made of brickwork, concrete, pervious concrete or natural stone.

13. Use according to any one of the preceding claims, wherein the inorganic mortar system is a multi-component inorganic mortar system.

14. Use according to any one of the preceding claims in a method for a chemical fastening of anchors and post-installed reinforcing bars in mineral substrates.

15. A two-component mortar system comprising a curable aqueous-phase aluminous cement component A and an initiator component B in aqueous-phase suitable for initiating the curing process, wherein component B comprises a sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof.

16. Method for a chemical fastening of anchors and post-installed reinforcing bars in mineral substrates, **characterized in that** an inorganic mortar system is used for fastening, which comprises a curable aluminous cement component A and an initiator component B for initiating the curing process, wherein component A comprises a calcium aluminate cement at least one blocking agent and water, and component B comprises an activator and water, and which contains a sodium polyphosphate, preferably selected from the group consisting of sodium tripolyphosphate (STPP, Na₅P₃O₁₀), sodium hexametaphosphate (SHMP, Na₆P₆O₁₈), sodium trimetaphosphate (STMP, Na₃P₃O₉), sodium metaphosphate (SMP, NaPO₃) and mixtures thereof.
